# EUROPÄISCHE PATENTSCHRIFT

(11) **EP 2 597 325 B1**
(45) Veröffentlichungstag und Bekanntmachung des Hinweises auf die Patenterteilung: **28.02.2024**
(21) Anmeldenummer: 12192554.9
(22) Anmeldetag: 14.11.2012
(51) Int. Cl.: F16C 11/06, F16C 23/04, F16C 33/74, F16C 7/02

(54) **Abgedichtete Gelenkverbindung**
Sealed articulated joint
Joint articulé étanche

(30) Priorität: 22.11.2011 DE 102011086857
(43) Veröffentlichungstag der Anmeldung: 29.05.2013
(73) Patentinhaber: Jungheinrich Aktiengesellschaft, 22047 Hamburg (DE)
(72) Erfinder: Schwingshandl, Frank, 85368 Moosburg (DE); Wimmer, Martin, 84032 Altdorf (DE)
(74) Vertreter: Weickmann & Weickmann PartmbB

(56) Entgegenhaltungen:
- DE-A1- 3 933 163
- JP-U- S6 145 617
- US-A- 3 794 392
- US-A- 3 822 100
- US-A- 3 822 890
- US-A1- 2006 022 412
- US-A1- 2008 199 113

## Beschreibung

Diese Erfindung betrifft eine abgedichtete Gelenkverbindung, insbesondere innerhalb eines Flurförderzeugs, zur Befestigung an einem Anschlusselement mit den Merkmalen des Oberbegriffs des Anspruchs 1.

Eine solche Gelenkverbindung ist aus der US 2008 199 113 A1 bekannt. In dem aus diesem Dokument bekannten Gelenklager ist ein Innenring über eine sphärisch gekrümmte Außenfläche von einer sphärisch gekrümmten Innenfläche eines Außenrings aufgenommen. Eine Dichtung ist in einer im Außenring umlaufenden Nut befestigt. Die Dichtung besteht aus einem Dichtungskörper und einem im Dichtungskörper einvulkanisierten Träger. In Richtung Innenring spaltet sich der Dichtungskörper in zwei voneinander beabstandeten Dichtlippen auf, wobei eine Dichtlippe geneigt nach außen und eine weitere Dichtlippe geneigt nach innen verläuft.

Im Stand der Technik sind Buchsen-Bolzen-Verbindungen bekannt, die als Gelenkverbindung beispielsweise von Spurhebeln von Flurförderzeugen dienen. Derartige Buchsen-Bolzen-Verbindungen werden jedoch auch an vielerlei Maschinen, wie etwa Baumaschinen, Holzverarbeitungsmaschinen, Maschinen der Baustoffindustrie und nicht zuletzt auch an anderen Einsatzorten als an Spurhebeln von Flurförderzeugen eingesetzt. Der Nachteil solcher ungedichteter Buchsen-Bolzen-Verbindungen liegt darin, dass sie insbesondere bei stärkerer Staub- oder sonstiger Schmutzbelastung der Umgebung starkem Verschleiß unterliegen. Daraus resultiert eine geringe Lebensdauer solcher Bauteile, was aufwendige Reparaturen erfordern kann. Eine nach dem Stand der Technik bekannte Verbesserung sind Abdichtungen solcher Buchsen-Bolzen-Verbindungen mit bekannten Dichtungsmitteln, wie etwa O-Ringen oder Radialwellendichtungen. In Pkw-Spurstangen werden häufig Kugelgelenke eingesetzt, die mit Manschetten geschützt sind. Jedoch sind auch die abgedichteten bekannten Gelenkverbindungen sehr starken äußeren Einflüssen nicht gewachsen, wie sie etwa bei der Reinigung mit einem Hochdruckreiniger auftreten.

Aufgabe der Erfindung ist es daher, die Wirkung von Dichtungen an Gelenkverbindungen zu verbessern, um diese auch gegen extreme äußere Bedingungen zu schützen. Damit soll gleichzeitig eine bessere Langlebigkeit der Gelenkverbindungen erreicht werden.

Gegenstand der Erfindung ist daher eine abgedichtete Gelenkverbindung, wobei die Gelenkverbindung aufweist: ein inneres Gelenkelement, das zur Befestigung an einem Anschlusselement ausgebildet ist, und ein äußeres Gelenkelement, das das innere Gelenkelement ringförmig umgibt, eine in zwei Richtungen gekrümmte Gleitfläche zwischen dem inneren und dem äußeren Gelenkelement, durch das das innere Gelenkelement zu dem äußeren Gelenkelement in einer Hauptdrehrichtung drehbar ist, wobei zusätzlich eine Bewegung in einer Schwenkrichtung möglich ist, die im Wesentlichen senkrecht zur Hauptdrehrichtung stattfindet, wenigstens einen Dichtring mit einem Dichtringkörper, der mit dem äußeren Gelenkelement wenigstens indirekt verbunden ist und die Gelenkverbindung nach außen abdichtet, wobei der Dichtringkörper eine erste ringförmige Lippe aufweist, die das innere Gelenkelement im Bereich der Gleitfläche abdichtend berührt und die von dem Dichtringkörper aus im Wesentlichen in Richtung der gekrümmten Gleitfläche verläuft, wobei zwischen der Gleitfläche und einer inneren Umfangsfläche der ersten Lippe ein keilförmiger Ringspalt mit keilförmigem Querschnitt ausgebildet ist und der Querschnitt der ersten Lippe im Wesentlichen parallel oder zu einer Spitze hin verjüngend ausgeführt ist, wobei die erste Lippe eine Kante aufweist, die mit einem geringen Kantenradius ausgeführt ist.

Die abgedichtete Gelenkanordnung ist erfindungsgemäß dadurch gekennzeichnet, dass die abgedichtete Gelenkverbindung eine einstückig mit dem Dichtringkörper verbundene zweite ringförmige Lippe zur Abdichtung der Gelenkverbindung unter Berührung einer Dichtfläche des Anschlusselements aufweist, wobei die zweite ringförmige Lippe so ausgebildet ist, dass sie im am Anschlusselement eingebauten Zustand der abgedichteten Gelenkverbindung eine Vorspannung gegen die Dichtfläche des Anschlusselements aufweist.

Das Anschlusselement kann beispielsweise eine Lasche mit einer Bohrung sein, an der die Gelenkverbindung mit einem Bolzen befestigt ist. Statt einer Lasche können beispielsweise auch Streben, Träger, Platten oder dgl. ein Anschlusselement bilden. in mehr als eine Richtung gekrümmte Gleitfläche kann beispielsweise als Abschnitt einer Kugeloberfläche, eines Ellipsoiden, eines Torus oder dgl. ausgebildet sein. Relevant ist dabei, dass sich das innere zu dem äußeren Gelenkelement in der Hauptdrehrichtung drehen lässt, wobei zusätzlich eine Bewegung in einer Schwenkrichtung möglich ist, die im Wesentlichen senkrecht zur Hauptdrehrichtung stattfindet. Die Hauptdrehrichtung unterscheidet sich von der Schwenkrichtung dadurch, dass die Hauptdrehrichtung einen größeren möglichen Bewegungswinkel hat.

Die Gelenkverbindung kann auch zwischen zwei Anschlusselementen angeordnet sein, wobei dann vorteilhaft ein Dichtring für die Abdichtung zu dem Anschlusselement hin vorgesehen ist. Bei der mit zusätzlicher Schwenkbeweglichkeit ausgeführten Gelenkverbindung ist das innere Gelenkelement von dessen Mitte in Bezug auf die Drehachse der Hauptdrehrichtung aus sich verjüngend zu beiden Enden des inneren Gelenkelements hin in Richtung der Drehachse der Hauptdrehrichtung ausgeführt. Das äußere Gelenkelement kann aus zwei einzelnen äußeren Gelenkelementen bestehen, die eine der Außenkontur des inneren Gelenkelements angepasste Innenkontur aufweisen und auf dem sich verjüngenden Anteil des inneren Gelenkelements angeordnet sein. Die beiden äußeren Gelenkelemente sind vorteilhaft zueinander fixiert, so dass sie das innere Gelenkelement sicher umschließen. Das Spiel des inneren Gelenkelements kann durch optimale Einstellung der Abstände der äußeren Gelenkelemente bei gleichzeitiger Drehbarkeit in die Hauptdrehrichtung und in die Schwenkrichtung minimiert werden.

In einem Ausführungsbeispiel kann das innere Gelenkelement an einem einzelnen Anschlusselement befestigt sein, wobei ein dem Anschlusselement abgewandter offener Teil der Gelenkverbindung beispielsweise durch eine metallene Kappe verschlossen sein kann. Bei diesem Ausführungsbeispiel ist nur ein Dichtring zwischen der Gelenkverbindung und dem Anschlusselement vorgesehen.

Ein Vorteil des Dichtrings der erfindungsgemäßen Gelenkverbindung besteht darin, dass die erste und die zweite ringförmige Lippe eine zweistufige Dichtwirkung entfalten. Das Gelenkelement ist in einer ersten Stufe durch die Dichtwirkung der zweiten ringförmigen Lippe in Verbindung mit der Dichtfläche des Anschlusselements vor Umwelteinflüssen geschützt. Durch die Zusammenwirkung der Dichtfläche des Anschlusselements mit der zweiten ringförmigen Lippe wird ein Raum zwischen den genannten Elementen und dem inneren Gelenkelement abgeschlossen. Innerhalb dieses abgeschlossenen Raums befindet sich zwischen dem Gelenkelement und der zweiten ringförmigen Lippe eine zweite Dichtstelle, die aus der ersten ringförmigen Lippe und dem inneren Gelenkelement gebildet ist. Die innere, erste ringförmige Lippe wirkt als zweite Dichtungsstufe nur gegenüber eindringenden Stoffen, denen es gelungen ist, die äußere Dichtung aus der zweiten ringförmigen Lippe und der Dichtfläche des Anschlusselements zu überwinden. Sie ist daher einer erheblich geringeren Belastung ausgesetzt und normalerweise in der Lage, die Gelenkverbindung auch bei extrem starker Beaufschlagung mit Stoffen von außen, wie etwa beim Dampfstrahlen oder Druckluftreinigen, sicher vor eindringendem Material zu schützen. Dadurch wird die Lebensdauer der Gelenkverbindung erheblich erhöht. Die erste ringförmige Lippe hat außerdem eine Sicherheitsfunktion, die dann eingreift, wenn die äußere, zweite ringförmige Lippe aufgrund von Beschädigung oder Verschleiß zerstört ist und bei starken Einflüssen von außen keine Dichtwirkung mehr entfaltet. Dann bleibt das Innere des Gelenkelements durch die erste, innere ringförmige Lippe immer noch vor dem größten Teil der äußeren Einflüsse geschützt.

Die Dichtungswirkung des Dichtringkörpers auf die Gelenkverbindung besteht darin, dass er den Raum um das äußere Gelenkelement besetzt und verhindert, dass von außen eindringendes Material die gekrümmte Gleitfläche über einen Weg an einer axialen Oberfläche des äußeren Gelenkelements erreicht, die zwischen dem inneren und dem äußeren Gelenkelement als theoretische Ebene ausgebildet ist, in der das Gleiten stattfindet.

Der Dichtringkörper ist mit dem äußeren Gelenkelement im eingebauten Zustand in einem Ausführungsbeispiel über ein Auge eines Spurhebels oder einer vergleichbaren Aufnahme für das Gelenkelement dadurch verbunden, dass in das Auge oder eine entsprechende Bohrung sowohl das äußere Gelenkelement eingepresst ist als auch wenigstens ein Dichtring. Das äußere Gelenkelement und der Dichtring müssen sich dabei nicht berühren, weshalb ihre Verbindung ausschließlich über das Element realisiert sein kann, in das das äußere Gelenkelement und der Dichtring eingepresst sind.

Erfindungsgemäß verläuft die erste ringförmige Lippe von dem Dichtringkörper aus im Wesentlichen in Richtung der gekrümmten Gleitfläche.

Die erste ringförmige Lippe verläuft somit zumindest näherungsweise und zumindest über einen Abschnitt parallel zu der gekrümmten Gleitfläche. Die Begriffe "im Wesentlichen in Richtung der gekrümmten Gleitfläche" und "näherungsweise parallel" umfassen auch Winkel zwischen der ersten ringförmigen Lippe und der gekrümmten Gleitfläche bis etwa 45 Grad. Bei starkem Angriff von Material von außen, wie etwa einem Hochdruckreinigerstrahl, wird die erste ringförmige Lippe durch den von außen auftretenden Druck auf den Bereich der Gleitfläche des inneren Gelenkelements gedrückt, den die erste ringförmige Lippe überdeckt. Die Dichtwirkung zwischen der ersten ringförmigen Lippe und dem inneren Gelenkelement wird somit erhöht und somit das Eindringen von Fremdmaterial in das Gelenkelement erschwert.

Die genannte Ausformung der ersten ringförmigen Lippe hat außerdem den Vorteil, dass Schmiermittel, das in die Gleitfläche des Gelenkelements gepresst wird, den Dichtring in Richtung der Umgebung des Gelenkelements passieren kann. Auf diese Weise kann verbrauchtes Schmiermittel, das beispielsweise mit Metallabrieb gefüllt ist, aus dem Gelenkelement entfernt und durch frisches Schmiermittel ersetzt werden.

In einer weiteren Ausführungsform der Erfindung verläuft die zweite ringförmige Lippe von dem Dichtringkörper aus im Wesentlichen in Richtung von der Gleitfläche weg.

Vorteilhaft verläuft die zweite ringförmige Lippe von dem Dichtringkörper aus außerdem in Richtung auf die Gleitfläche des Anschlusselements zu. Dadurch liegt sie im eingebauten Zustand vorteilhaft an der Gleitfläche des Anschlusselements an. Durch die Ausrichtung der zweiten ringförmigen Lippe von dem Dichtringkörper aus und im Wesentlichen in Richtung von der Gleitfläche weg reckt sie sich eindringendem Wasser, Schmutz, Druckluft oder dgl. derart entgegen, dass der Druck dieser Substanzen bewirkt, dass die zweite ringförmige Lippe an die Dichtfläche des Anschlusselements angedrückt wird. Außerdem ermöglicht diese Ausgestaltung der zweiten ringförmigen Lippe, dass durch die erste, innere ringförmige Lippe hindurchgedrücktes Schmiermittel der Gelenkverbindung auch durch die von der zweiten ringförmigen Lippe und der Dichtfläche des Anschlusselements gebildete Dichtstelle passieren kann. Diese Dichtstelle, wie auch die von der ersten ringförmigen Lippe gebildete Dichtstelle, haben eine Ventilfunktion, die bewirkt, dass die Dichtstellen in Richtung von der Gelenkverbindung nach au-βen durchlässig sind, während sie in der Gegenrichtung des Durchlass von Stoffen versperren.

In einer weiteren Ausführungsform der Erfindung weist der Dichtringkörper eine an die zweite Lippe angrenzende Nut auf, die an einer der Gleitfläche abgewandten radialen Außenseite des Dichtrings liegt.

Durch die genannte Nut wird bewirkt, dass das Andrücken der zweiten Lippe an die Dichtfläche des Anschlusselements optimiert stattfindet. Im Vergleich zu einer Ausführungsform ohne Nut entstehen bei einer Verformung der zweiten ringförmigen Lippe geringere Anpresskräfte, wodurch wiederum grö-βere Verformungen der zweiten ringförmigen Lippe zur Erzeugung einer Anpresskraft ermöglicht werden. Kleinere Schwankungen des Vorspannweges führen daher nicht zu großen Änderungen der Anpresskraft und insgesamt zu einer gleichmäßigen und zuverlässigen Dichtwirkung. Entsprechend bewirkt die Nut, dass die zweite ringförmige Lippe auch vergleichsweise größere Schwenkbewegungen ausgleichen kann.

In einer weiteren Ausführungsform der Erfindung ist die erste ringförmige Lippe so ausgebildet, dass sie im am Anschlusselement im eingebauten Zustand der abgedichteten Gelenkverbindung eine Vorspannung gegen die Gleitfläche aufweist.

Eine solche Vorspannung kann erreicht werden, indem die erste und die zweite ringförmige Lippe so geformt sind, dass ihre freie Form im eingebauten Zustand mit den jeweiligen Anlageflächen überlappen bzw. diese durchdringen würden, was jedoch physikalisch nicht möglich ist, weshalb sich die im Vergleich zu den Anlageflächen weicheren, ringförmigen Lippen verformen und dabei eine Vorspannung gegen die Anlageflächen aufbauen. Als geeignetes Maß hat sich beispielsweise 1 mm Überlappung der zwei genannten Lippen in unverformtem Zustand mit den entsprechenden Gegenflächen herausgestellt. Alternativ können auch Überlappungen von 0,5 mm oder 2 mm vorgesehen werden.

Als Materialien für den Dichtring nach der Erfindung sind beispielsweise verschiedene Gummisorten, Elastomere einschließlich Fluorkautschuk oder Silikone geeignet. Der Dichtringkörper kann in einem Ausführungsbeispiel aus einem Metallring bestehen, der von einem elastischen Material wenigstens teilweise umgeben ist.

In einer weiteren Ausführungsform weist die in zwei Richtungen gekrümmte Gleitfläche die Form eines Kugelflächenabschnitts auf.

Mit dieser Form eines Kugelflächenabschnitts, ist eine optimale Schwenkbewegung der Gelenkverbindung möglich.

Ein weiterer Aspekt der Erfindung betrifft einen Spurhebel mit einer abgedichteten Gelenkverbindung nach der Erfindung.

Die vorgeschlagene Gelenkverbindung kann in einem Spurhebel, insbesondere eines Flurförderzeugs besonders vorteilhaft zur Anwendung kommen. Ein solcher Spurhebel muss große Drehbewegungen in der Hauptdrehrichtung ausführen können und kleine Schwenkbewegungen ausführen können, um Spiel und Besonderheiten der Fahrwerksgeometrie ausgleichen zu können.

In einer Ausführungsform des Spurhebels weist dieser zwei abgedichtete Gelenkverbindungen für jeweils zwei Anschlusselemente, zwischen denen die Gelenkverbindungen jeweils angeordnet sind, und vier Dichtringe auf, wobei jedem Anschlusselement jeweils ein Dichtring zugeordnet ist.

Ein solcher Spurhebel kommt vorteilhaft in Flurförderzeugen zum Einsatz, wo er zwischen einem Achsschenkel und einer Lenkeinrichtung angeordnet werden kann. Aufgrund der durchgängigen Dichtung an allen Anschlusselementen ist ein solcher Spurhebel besonders langlebig und für die Reinigung mit Hochdruckreinigern geeignet.

In einer weiteren Ausführungsform des Spurhebels ist in einer Bohrung des Spurhebels ein Dichtring der abgedichteten Gelenkverbindung eingepresst.

Nach dem Stand der Technik werden Gelenkverbindungen beispielsweise in Augen von Spurhebeln eingepresst. Eine in axialer Richtung des Auges breitere Ausführung des Auges ermöglicht, auf einer oder beiden Seiten des Spurhebels zusätzlich zu der Gelenkverbindung einen Dichtring einzupressen. Der Dichtring kann auf diese Weise dicht und mit geringem Aufwand an dem Spurhebel befestigt werden.

In einer weiteren Ausführungsform des Spurhebels ist der Außendurchmesser des Dichtringkörpers um 0,5 mm größer als die Bohrung in dem Spurhebel.

Auf diese Weise entsteht ein Übermaß der Passung zwischen der Bohrung in dem Spurhebel und dem Dichtringkörper, die für eine dichte Verbindung zwischen dem Dichtring und dem Spurhebel bei geeigneten Presskräften sorgt.

Ein weiterer Aspekt der Erfindung betrifft ein Flurförderzeug, das ein Anschlusselement und eine daran befestigte abgedichtete Gelenkverbindung nach der Erfindung aufweist.

Ein solches Flurförderzeug weist die abgedichtete Gelenkverbindung vorzugsweise an mindestens einem seiner Spurhebel auf, wodurch die entsprechenden Gelenkverbindungen und die damit verbundenen Teile mit einem Hochdruckreiniger gereinigt werden können, ohne dass darunter die Lebensdauer der Gelenke leidet. Alternativ oder zusätzlich können entsprechende Gelenkverbindungen an anderen beweglichen Teilen des Flurförderzeugs vorgesehen sein, etwa an einer Gabelzinkenverstellung, an den Aufhängungspunkten von Hydraulikzylindern oder an anderen Druck- oder Zugelementen.

In einer Ausführungsform des Flurförderzeugs weist dieses zwei Anschlusselemente auf, denen eine abgedichtete Gelenkverbindung mit zwei Dichtringen zugeordnet ist.

Die Ausführung mit zwei Anschlusselementen, die eine abgedichtete Gelenkverbindung umfassen, welche mit zwei Dichtringen versehen ist, ist, wenn sie die Gelenkverbindung von beiden Seiten einschließt, mechanisch besonders vorteilhaft, da das Vorsehen von zwei Anschlusselementen zu weniger Biegekräften in denselben führen kann, wenn Kräfte über die Gelenkverbindung in die Anschlusselemente eingeleitet werden. Dies kann im Vergleich zu einer Konstruktion mit nur einem Anschlusselement zu Materialersparnis führen.

In einer weiteren Ausführungsform des Flurförderzeugs weist wenigstens ein Anschlusselement eine Einführungsfase oder eine Einführungsrundung an einer Kante der Dichtfläche des Anschlusselements auf.

Eine solche Einführungsfase oder Einführungsrundung bewirkt, dass beim Positionieren der Dichtung einer Gelenkverbindung an der Dichtfläche, insbesondere, wenn die Dichtung über die Dichtfläche parallel zu derselben an ihre Einbauposition geschoben wird, die Dichtung durch die Einführungsfase oder -rundung vorgespannt wird, wobei insbesondere bei einer Einführungsrundung der Dichtring durch scharfe Kanten nicht beschädigt und somit die Dichtwirkung nicht beeinträchtigt wird.

Die Erfindung wird nachfolgend unter Bezugnahme auf die anliegenden Zeichnungen beispielhaft und nicht einschränkend im Detail beschrieben.
- Fig. 1: ist ein Querschnitt durch eine Ausführungsform der Gelenkverbindung.
- Fig. 2: ist ein Querschnitt durch eine Ausführungsform eines Spurhebels mit zwei Gelenkverbindungen.
- Fig. 3: ist ein Querschnitt durch eine Gelenkverbindung, die einen Spurhebel mit zwei Anschlusselementen gelenkig verbindet.
- Fig. 4: ist eine perspektivische Darstellung eines Gabelstaplers als Beispiel für ein Flurförderzeug, in dem die Erfindung zur Anwendung kommt.

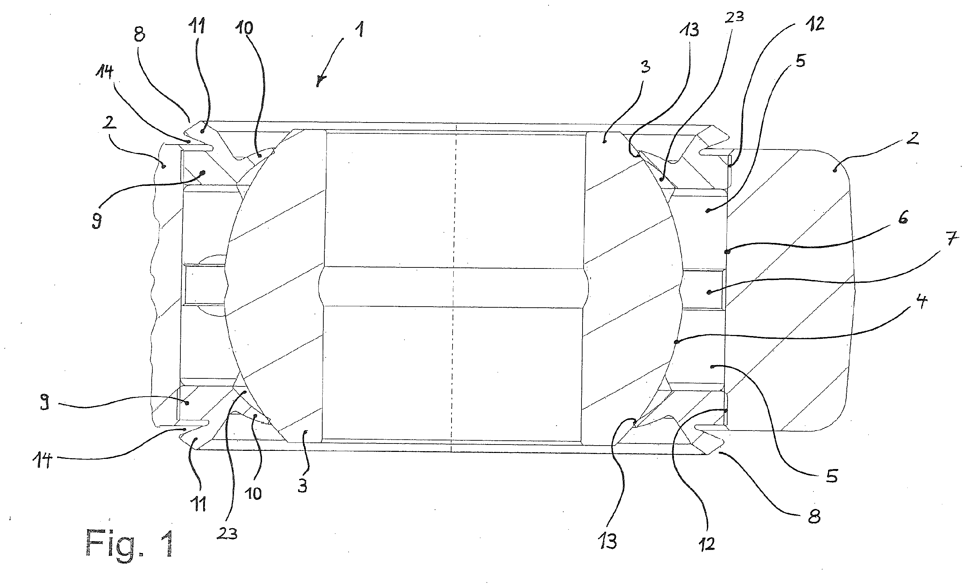

Fig. 1 zeigt einen Querschnitt einer Ausführungsform der Gelenkverbindung 1, die in einen Spurhebel 2 eingepresst ist. Die Gelenkverbindung besteht aus einem inneren Gelenkelement 3 in Form eines Rings, dessen Außenumfangsfläche größtenteils die Form eines Kugelabschnitts aufweist. Diese Außenumfangsfläche fällt mit der gekrümmten Gleitfläche 4 zusammen, die eine theoretische Fläche darstellt, in der das Abgleiten des inneren Gelenkelements an zwei äußeren Gelenkelementen 5 stattfindet. Die äußeren Gelenkelemente sind ringförmig ausgeführt und weisen auf ihrer inneren Umfangsfläche die Form eines Kugelabschnitts mit demselben Radius wie der Kugelabschnitt, der die äußere Umfangsfläche des inneren Gelenkelements 3 bildet, auf. Diese innere Umfangsfläche der äußeren Gelenkelemente 5 fällt ebenfalls mit der gekrümmten Gleitfläche 4 zusammen. Die äußeren Gelenkelemente 5 sind in einer Bohrung 6 derart eingepresst, dass das Spiel zwischen dem inneren Gelenkelement 3 und den äußeren Gelenkelementen 5 gering ist und die Gelenkelemente zueinander beweglich bleiben. Zwischen den äußeren Gelenkelementen 5 befindet sich ein Hohlraum 7, in den durch eine Bohrung in dem Spurhebel 2 Fett eingepresst werden kann, um die Gelenkverbindung zu schmieren.

Weiter weist die Gelenkverbindung 1 zwei Dichtringe 8 auf, die jeweils aus einem Dichtringkörper 9, einer ersten, inneren Dichtlippe 10 und einer zweiten, äußeren Dichtlippe 11 bestehen. Die Dichtlippen 10 und 11 sind ringförmig ausgebildet und um dieselbe Mittelachse wie die Gelenkelemente 3 und 5 angeordnet. Die Dichtringe 8 sind ebenso wie die äußeren Gelenkelemente 5 in die Bohrung 6 in dem Spurhebel 2 eingepresst und liegen axial an den äußeren Gelenkelementen 5 an. Um eine Dichtigkeit und eine geeignete Presskraft beim Einpressen der Dichtungen 8 in die Bohrung 6 zu gewährleisten, ist ein Übermaß 12 zwischen der Bohrung 6 und den Ringen 8 vorgesehen. Die Ringe sind in der Figur 1 in unverformtem Zustand dargestellt, so dass sich die Überlappung 12 mit dem Material des Spurhebels 2 ergibt. Das Übermaß zwischen den Dichtringen 8 und der Bohrung 6 beträgt vorteilhaft 0,5 mm. Weiter ergibt sich eine Überlappung von Material der inneren Dichtlippe 10 mit dem inneren Gelenkelement 3, die mit der Bezugsziffer 13 gekennzeichnet ist. Die Überlappung ergibt sich dadurch, dass der Dichtring in unverformtem Zustand dargestellt ist. In der Realität wird sich die Dichtlippe 10 in radialer Richtung in Bezug auf die Gleitfläche 4 so weit verformen, dass sie nicht in das innere Gelenkelement 3 eindringt. Durch die Verformung ergibt sich eine Vorspannung, mit der die innere Dichtlippe 10 an das innere Gelenkelement 3 angepresst wird. Vorteilhaft beträgt der Verformungsweg der inneren Dichtlippe 1 mm.

Die Dichtlippe 10 ist in Bezug auf die Gleitfläche 4 so ausgeformt, dass sich zwischen der Gleitfläche 4 und der inneren Umfangsfläche der Lippe 10 ein keilförmiger Ringspalt 23 mit keilförmigem Querschnitt ausbildet. Der Querschnitt der Dichtlippe 10 ist im Wesentlichen parallel oder zur Spitze hin leicht verjüngt ausgeführt. Die Dichtlippe 10 weist eine Kante auf, die mit einem geringen Kantenradius ausgeführt ist, so dass sie Fett und/oder Schmutz auf der äußeren Umfangsfläche des inneren Gelenkelements 3 abstreifen kann und für eine gute Dichtigkeit sorgt. Die Dichtlippe 10 ist einstückig mit dem Dichtringkörper 9 verbunden.

Die zweite, äußere Dichtlippe 11 ist ebenfalls einstückig mit dem Dichtringkörper 9 verbunden. An seinem Außenumfang weist der Dichtring 8 eine Nut 14 auf, die an die zweite Dichtlippe 11 und den Dichtringkörper angrenzt. Die äußere Dichtlippe hat einen Querschnitt im Übergang zum Dichtringkörper, der geringer ist als der Querschnitt der äußeren Lippe 11 an den weiter von dem Dichtringkörper 9 entfernten Stellen. Durch die Dünnstelle am Übergang zwischen zweiter Lippe 11 und Dichtringkörper 9, der durch die Nut 14 bewirkt wird, kann die zweite Lippe 11 ohne Materialüberlastung einen Weg in Richtung des Dichtringkörpers 9 zurücklegen, der durch das vollständige Zusammendrücken der Nut 14 begrenzt wird. In diesem vollständig zusammengedrückten Zustand tritt noch keine Materialüberlastung an dem Dichtring 8, insbesondere an der zweiten Dichtlippe 11 auf. In geöffnetem Zustand hat die Nut 14 außerdem den Effekt, dass von außen zuströmendes Spritz- oder Reinigungswasser Druck in der Nut ausübt und sie zu vergrö-βern sucht. Dadurch wird die äußere Lippe 11 weiter nach außen gedrängt, was im eingebauten Zustand der Gelenkverbindung eine Verstärkung der Dichtwirkung bewirkt. Bei starken Einflüssen von außen ist die Dichtung somit selbstverstärkend und eigensicher.

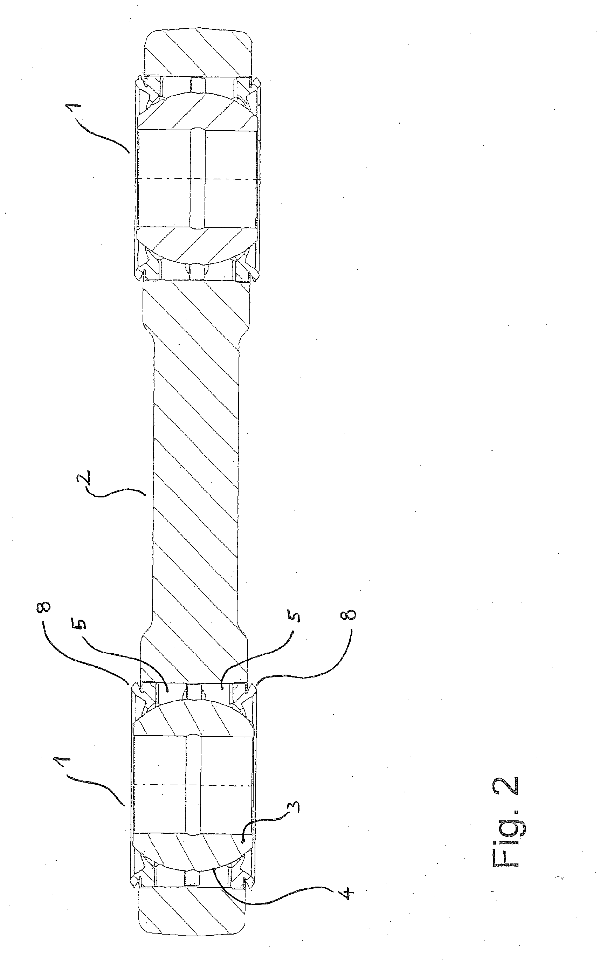

Fig. 2 zeigt einen Spurhebel 2 mit zwei Gelenkverbindungen 1. Die Gelenkverbindungen 1 sind identisch zu der Ausführungsform, die in Fig. 1 gezeigt ist, aufgebaut. Die beiden Gelenkverbindungen in dem Spurhebel 2 sind identisch ausgeführt.

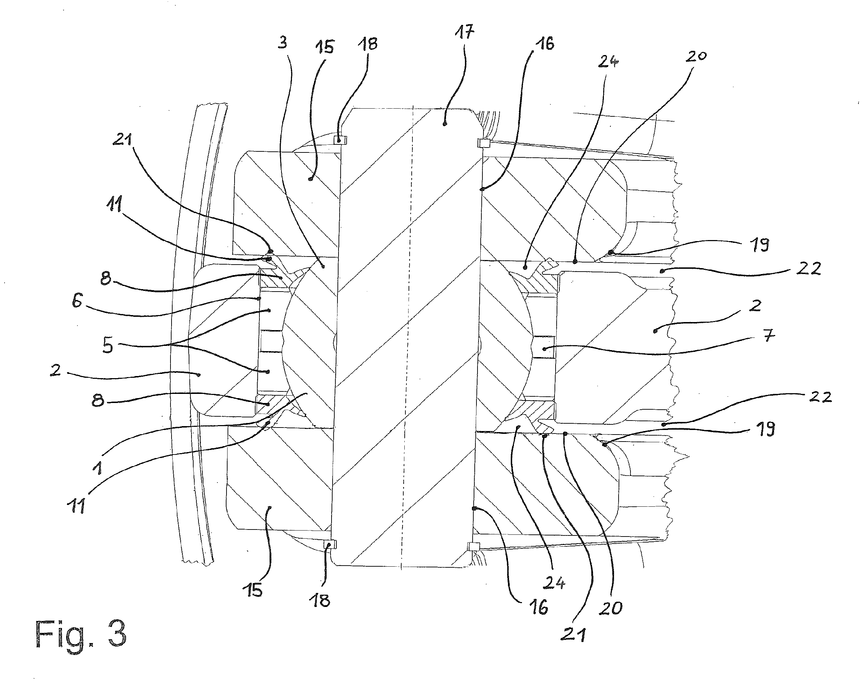

Fig. 3 zeigt einen Querschnitt durch eine Gelenkverbindung 1 mit einem inneren Gelenkelement 3, zwei äußeren Gelenkelementen 5 sowie zwei Dichtringen 8. Die Gelenkverbindung ist mit ihren äußeren Gelenkelementen 5 und den Dichtringen 8 in eine Bohrung 6 eines Spurhebels 2 eingepresst. Die Gelenkverbindung 1 ist zwischen zwei Anschlusselementen 15 mit jeweils einer Bohrung 16 angeordnet und mit einem Bolzen 17 zwischen den Anschlusselementen 15 befestigt. Der Bolzen 17 ist durch eine Mittelbohrung in dem inneren Gelenkelement 3 sowie durch die Bohrungen 16 der Anschlusselemente gesteckt und mit Sicherungsringen 18 auf jeweils der Außenseite der Anschlusselemente 15 gesichert. Alternativ kann auch eine Schraube mit einer Mutter verwendet werden.

Die äußeren Dichtlippen 11 der Dichtringe 8 überlappen jeweils mit inneren Oberflächen der Anschlusselemente 15, die als Dichtfläche 20 ausgebildet sind. Eine Überlappung 21 zwischen den zweiten Dichtlippen 11 der Dichtringe 8 und der Dichtflächen 20 ist dadurch begründet, dass die Dichtlippen 11 in ihrem unverformten Zustand dargestellt sind. Tatsächlich verformen sich die Lippen 11 in Richtung des Dichtringkörpers 9 der Dichtungen 8, wodurch sich eine Vorspannung der Lippen 11 gegen die Dichtflächen 20 ergibt. Die Überlappung zwischen der unverformten Lippe 11 und der Dichtfläche 20 beträgt vorzugsweise 1 mm, alternativ sind jedoch auch 2 mm oder 0,5 mm möglich. Um das Einfädeln des Spurhebels 2 mit der Gelenkverbindung 1 zwischen die Anschlusselemente 15 zu erleichtern und insbesondere die zweiten Dichtlippen 11 zu schonen, ist an einem Rand der Dichtflächen 20 eine Einfädelungsverrundung 19 vorgesehen, an der die in axialer Richtung am weitesten vorstehenden Kanten der Lippen 11 entlanggleiten und beim Einfädeln des Spurhebels 2 zwischen die Anschlusselemente 15 allmählich in Richtung des Dichtringkörpers 9 gebogen werden. Dadurch wird eine lokale Materialüberlastung in den Dichtlippen 11 und somit eine Zerstörung von Teilen der am weitesten axial vorstehenden Kante der Lippe 11 und damit auch ihrer Dichtwirkung vermieden. Zudem vereinfacht und beschleunigt die Einfädelungsverrundung 19 den Montagevorgang.

Anhand der Fig. 3 lässt sich die Dichtungswirkung der Dichtringe 8 detailliert erklären. Spritz- oder Reinigungswasser kann in den Spalten 22 zwischen dem Spurhebel 2 und den Anschlusselementen 15 in Richtung der Gelenkverbindung 1 vordringen. Das eindringende Wasser trifft auf die Nut 14 sowie seitlich auf den Dichtringkörper 9 und die äußere Lippe 11. Durch den Druck von eindringendem Wasser wird die Nut aufgeweitet und die Lippe 11 stärker an die Dichtfläche 20 angepresst. Dadurch erhöht eindringendes Wasser die Dichtwirkung, was das Eindringen von Wasser in das Innere der Gelenkverbindung erschwert. Der Dichtringkörper 9 bildet bei dieser Dichtwirkung eine Barriere zwischen den Spalten 22 und dem ringförmigen Keilspalt zwischen den ersten Lippen 10 und der äußeren Umfangsfläche des inneren Gelenkelements 3. Die Dichtwirkung wird sowohl durch die Presspassung 12 als auch durch das Anliegen des Dichtringkörpers 9 an den äußeren Gelenkelementen 5 bewirkt. Jede der beiden genannten Wirkungen kann jedoch für sich allein als Dichtwirkung ausreichen. Wenn durch den Hohlraum 7 zwischen den äußeren Gelenkelementen 5 Fett in die Gelenkverbindung 1 gepresst wird, strömt dieses durch den zum Gleiten erforderlichen Zwischenraum zwischen dem inneren Gelenkelement 3 und den äußeren Gelenkelementen 5, so dass es den ringförmigen Keilspalt 23 zwischen der innerne Lippe 10 und dem inneren Gelenkelement 3 füllt. Wenn dieser Keilspalt 23 gefüllt ist, tritt Fett an der ersten Lippe 10 vorbei in einen Zwischenraum 24 ein. Wenn dieser Zwischenraum 24 mit Fett gefüllt ist, so tritt Fett an der zweiten Dichtlippe 11 vorbei in den Ringspalt 22 aus. Beim Abschmieren kann durch das Austreten dieses Fettes festgestellt werden, dass die Gelenkverbindung durchgeschmiert ist. Sowohl die erste Lippe 10 als auch die zweite Lippe 11 bilden somit ein Ventil, durch das Fett aus der Gelenkverbindung ausströmen kann, wogegen jedoch von außen in die Gelenkverbindung eindringendes Wasser aufgehalten wird. Auch die genannte vorteilhafte Abschmiermöglichkeit trägt zur Erhöhung der Lebensdauer der Gelenkverbindung bei.

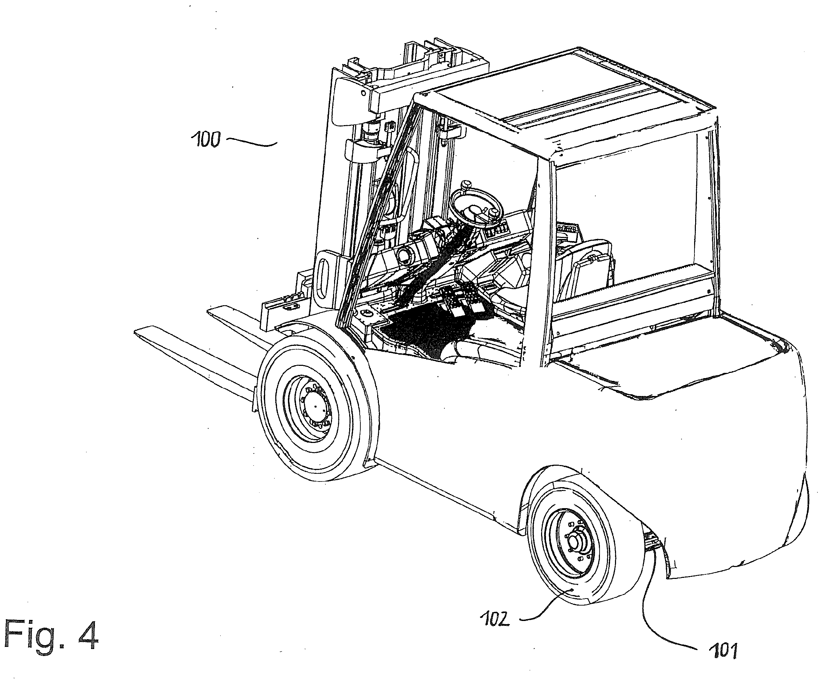

Die Fig. 4 zeigt einen Gabelstapler als Beispiel für ein Flurförderzeug mit einer im Heck des Fahrzeugs angeordneten lenkbaren Achse 101. Die hinteren Räder 102 des Gabelstaplers 100 sind lenkbar an der Achse 101 oder in einer alternativen Ausführungsform unmittelbar an dem Gabelstapler 100 befestigt und werden von einem Spurhebel angelenkt, der wenigstens eine abgedichtete Gelenkverbindung nach der Erfindung aufweist. Der Spurhebel und die abgedichtete Gelenkverbindung sind in der Figur 4 nicht gezeigt. In einer alternativen Ausführungsform können auch die Vorderräder des Gabelstaplers über eine erfindungsgemäße abgedichtete Gelenkverbindung angelenkt sein.

## Patentansprüche

1. Abgedichtete Gelenkverbindung (1),
wobei die Gelenkverbindung (1) aufweist:
ein inneres Gelenkelement (3), das zur Befestigung an einem Anschlusselement (15) ausgebildet ist, und ein äußeres Gelenkelement (5), das
das innere Gelenkelement (3) ringförmig umgibt,
eine in zwei Richtungen gekrümmte Gleitfläche (4) zwischen dem inneren Gelenkelement (3) und dem äußeren Gelenkelement (5),
durch die das innere Gelenkelement (3) zu dem äußeren Gelenkelement (5) wenigstens in eine Hauptdrehrichtung drehbar ist, wobei zusätzlich eine Bewegung in einer Schwenkrichtung möglich ist, die im Wesentlichen senkrecht zur Hauptdrehrichtung stattfindet, wenigstens einen Dichtring (8) mit einem Dichtringkörper (9), der mit dem äußeren Gelenkelement (5) wenigstens indirekt verbunden ist und die Gelenkverbindung nach außen abdichtet,
wobei der Dichtringkörper (9) eine erste ringförmige Lippe (10) aufweist, die das innere Gelenkelement (3) im Bereich der Gleitfläche (4) abdichtend berührt, und die von dem Dichtringkörper (9) aus im Wesentlichen in Richtung der gekrümmten Gleitfläche (4) verläuft, wobei zwischen der Gleitfläche (4) und einer inneren Umfangsfläche der ersten Lippe (10) ein keilförmiger Ringspalt (23) mit keilförmigem Querschnitt ausgebildet ist und der Querschnitt der ersten Lippe (10) im Wesentlichen parallel oder zu einer Spitze hin verjüngend ausgeführt ist, wobei die erste Lippe (10) eine Kante aufweist, die mit einem geringen Kantenradius ausgeführt ist,
**dadurch gekennzeichnet, dass** die abgedichtete Gelenkverbindung eine einstückig mit dem Dichtringkörper (9) verbundene zweite ringförmige Lippe (11) zur Abdichtung der Gelenkverbindung (1) unter Berührung einer Dichtfläche (20) des Anschlusselements (15) aufweist, wobei die zweite ringförmige Lippe (11) so ausgebildet ist, dass sie im am Anschlusselement (15) eingebauten Zustand der abgedichteten Gelenkverbindung (1) eine Vorspannung gegen die Dichtfläche (20) des Anschlusselements (15) aufweist.

2. Abgedichtete Gelenkverbindung (1) nach Anspruch 1, **dadurch gekennzeichnet, dass** die zweite ringförmige Lippe (11) von dem Dichtringkörper (9) aus im Wesentlichen von der Gleitfläche (4) weg verläuft.

3. Abgedichtete Gelenkverbindung (1) nach Anspruch 1 oder 2, **dadurch gekennzeichnet, dass** der Dichtringkörper (9) eine an die zweite ringförmige Lippe (11) angrenzende Nut (14) aufweist, die an einer der Gleitfläche (4) abgewandten radialen Außenseite des Dichtrings (8) liegt.

4. Abgedichtete Gelenkverbindung (1) nach einem der Ansprüche 1 bis 3, **dadurch gekennzeichnet, dass** die erste ringförmige Lippe (10) so ausgebildet ist, dass sie im am Anschlusselement (15) eingebauten Zustand der abgedichteten Gelenkverbindung (1) eine Vorspannung gegen die Gleitfläche (4) aufweist.

5. Abgedichtete Gelenkverbindung (1) nach einem der Ansprüche 1 bis 4, **dadurch gekennzeichnet, dass** die Gleitfläche (4) eine Kugelflächenabschnittsform aufweist.

6. Spurhebel (2) mit einer abgedichteten Gelenkverbindung (1) nach einem der Ansprüche 1 bis 5.

7. Spurhebel (2) nach Anspruch 6, **dadurch gekennzeichnet, dass** er zwei abgedichtete Gelenkverbindungen (1) für jeweils zwei Anschlusselemente (15), zwischen denen die Gelenkverbindungen (1) jeweils angeordnet sind, und vier Dichtringe (8) aufweist, wobei jedem Anschlusselement (15) jeweils ein Dichtring (8) zugeordnet ist.

8. Spurhebel (2) nach einem der Ansprüche 6 oder 7, **dadurch gekennzeichnet, dass** in einer Bohrung (6) des Spurhebels (2) ein Dichtring (8) der abgedichteten Gelenkverbindung (1) eingepresst ist.

9. Flurförderzeug, **dadurch gekennzeichnet, dass** es ein Anschlusselement (15) und eine daran befestigte abgedichtete Gelenkverbindung (1) nach einem der Ansprüche 1 bis 5 aufweist.

10. Flurförderzeug nach Anspruch 9. **dadurch gekennzeichnet, dass** es zwei Anschlusselemente (15) aufweist, denen eine abgedichtete Gelenkverbindung (1) mit zwei Dichtringen (8) zugeordnet ist.

11. Flurförderzeug nach einem der Ansprüche 9 oder, **dadurch gekennzeichnet, dass** wenigstens ein Anschlusselement (15) eine Einführungsfase oder eine Einführungsrundung (19) an einer Kante der Dichtfläche (20) des Anschlusselements (15) aufweist.

## Claims

1. Sealed joint connection (1),
the joint connection (1) having:
an inner joint element (3), which is adapted for being fixed to a connection element (15),
and an outer joint element (5), which surrounds the inner joint element (3) in a ring shape,
a sliding surface (4) curved in two directions between the inner joint element (3) and the outer joint element (5), by means of which the inner joint element (3) is rotatable with respect to the outer joint element (5) at least in a main rotation direction, wherein additionally a movement in a pivot direction is possible, which substantially takes place perpendicular to the main rotation direction,
at least one sealing ring (8) with a sealing ring body (9), which is connected to the outer joint element (5) at least indirectly and seals the joint connection to the outside,
wherein the sealing ring body (9) has a first ring-shaped lip (10), which contacts the inner joint element (3) in the region of the sliding surface (4) in a sealing manner, and which extends from the sealing ring body (9) substantially towards the curved sliding surface (4), wherein between the sliding surface (4) and an inner circumferential surface of the first lip (10) a wedge-shaped ring slot (23) with a wedge-shaped cross-section is formed and the cross-section of the first lip (10) is formed substantially parallel or tapering to a tip, wherein the first lip (10) has an edge, which is formed with a small edge radius,
**characterized in that** the sealed joint connection has second ring-shaped lip (11), which is formed in one piece with the sealing ring body (9), for sealing the joint connection (1) while contacting a sealing surface (20) of the connection element (15), wherein the second ring-shaped lip (11) is formed such that it is biased against the sealing surface (20) of the connection element (15) in a state in which the sealed joint connection (1) is mounted on the connection element (15).

2. Sealed joint connection (1) according to claim 1,
**characterized in that** the second ring-shaped lip (11) extends from the sealing ring body (9) substantially away from the sliding surface (4).

3. Sealed joint connection (1) according to claim 1 or 2,
**characterized in that** the sealing ring body (9) has a notch (14) bordering the second ring-shaped lip (11), which lies on a radially outer side of the sealing ring (8) facing away from the sliding surface (4).

4. Sealed joint connection (1) according to one of claims 1 to 3,
**characterized in that** the first ring-shaped lip (10) is formed such that it is biased against the sliding surface (4) in the state in which the sealed joint connection (1) is mounted on the connection element (15).

5. Sealed joint connection (1) according to any of claims 1 to 4,
**characterized in that** the sliding surface (4) has the shape of a spherical surface section.

6. Steering lever (2) with a sealed joint connection (1) according to any of claims 1 to 5.

7. Steering lever (2) according to claim 6,
**characterized in that** it has two sealed joint connections (1) for two respective connection elements (15), between which the joint connections (1) are respectively positioned, and four sealing rings (8), wherein to each connection element (15) a respective sealing ring (8) is provided.

8. Steering lever (2) according to any of claims 6 and 7,
**characterized in that** in a bore hole (6) of the steering lever (2) a sealing ring (8) of the sealed joint connection (1) is pressed.

9. Industrial truck,
**characterized in that** it has a connection element (15) and a sealed joint connection (1) according to any of claims 1 to 5 mounted thereon.

10. Industrial truck according to claim 9,
**characterized in that** it has two connection elements (15), to which a sealed joint connection (1) with two sealing rings (8) is provided.

11. Industrial truck according to any of claims 9 or 10,
**characterized in that** at least one connection element (15) has an insertion bevel or an insertion rounding (19) at an edge of the sealing surface (20) of the connection element (15).

## Revendications

1. Joint articulé étanche (1 ),
dans lequel la liaison articulée (1) comprend :
un élément d'articulation intérieur (3), qui est conçu pour être fixé à un élément de raccordement (15),
et un élément d'articulation extérieur (5) qui
entoure l'élément d'articulation intérieur (3) de manière annulaire,
une surface de glissement (4) courbée dans deux directions entre l'élément d'articulation intérieur (3) et l'élément d'articulation extérieur (5), grâce à laquelle l'élément d'articulation intérieur (3) peut être tourné par rapport à l'élément d'articulation extérieur (5) au moins dans un sens de rotation principal,
dans lequel un mouvement dans une direction de pivotement est en outre possible, qui a lieu essentiellement perpendiculairement à la direction de rotation principale, au moins une bague d'étanchéité (8) avec un corps de bague d'étanchéité (9), qui est reliée au moins indirectement à l'élément d'articulation extérieur (5) et assure l'étanchéité de la liaison articulée vers l'extérieur, dans lequel le corps de bague d'étanchéité (9) présente une première lèvre annulaire (10), qui est en contact étanche avec l'élément d'articulation intérieur (3) dans la zone de la surface de glissement (4) et qui s'étend à partir du corps de bague d'étanchéité (9) essentiellement dans la direction de la surface de glissement (4) incurvée, dans lequel un interstice annulaire (23) de section transversale en forme de cale est formé entre la surface de glissement (4) et une surface circonférentielle intérieure de la première lèvre (10), et la section transversale de la première lèvre (10) est réalisée essentiellement parallèlement ou en se rétrécissant vers une pointe, dans lequel la première lèvre (10) présente un bord qui est réalisée avec un faible rayon de bord,
**caractérisé en ce que** le joint articulé étanche présente une deuxième lèvre annulaire (11) reliée d'une seule pièce au corps de bague d'étanchéité (9) pour assurer l'étanchéité du joint articulé (1) en contact avec une surface d'étanchéité (20) de l'élément de raccordement (15), dans lequel la deuxième lèvre annulaire (11) est conçue de telle sorte que, lorsque le joint articulé étanche (1) est monté sur l'élément de raccordement (15), elle présente une précontrainte contre la surface d'étanchéité (20) de l'élément de raccordement (15).

2. Joint articulé étanche (1) selon la revendication 1, **caractérisé en ce que** la deuxième lèvre annulaire (11) s'étend depuis le corps de bague d'étanchéité (9) en s'éloignant essentiellement de la surface de glissement (4).

3. Joint articulé étanche (1) selon la revendication 1 ou 2, **caractérisé en ce que** le corps de bague d'étanchéité (9) présente une rainure (14) adjacente à la deuxième lèvre annulaire (11) et située sur une face radialement extérieure de la bague d'étanchéité (8), opposée à la surface de glissement (4).

4. Joint articulé étanche (1) selon l'une des revendications 1 à 3,
**caractérisé en ce que** la première lèvre annulaire (10) est configurée de manière à présenter une précontrainte contre la surface de glissement (4) lorsque le joint articulé étanche (1) est monté sur l'élément de raccordement (15).

5. Joint articulé étanche (1) selon l'une des revendications 1 à 4,
**caractérisé en ce que** la surface de glissement (4) présente une forme de section de surface sphérique.

6. Levier de voie (2) comportant un joint articulé étanche (1) selon l'une des revendications 1 à 5.

7. Levier de voie (2) selon la revendication 6, **caractérisé en ce qu'**il présente deux joints articulées étanches (1) pour respectivement deux éléments de raccordement (15) entre lesquels les joint articulées (1) sont respectivement disposées, et quatre bagues d'étanchéité (8), dans lequel une bague d'étanchéité (8) est respectivement associée à chaque élément de raccordement (15).

8. Levier de voie (2) selon l'une des revendications 6 ou 7, **caractérisé en ce qu'**une bague d'étanchéité (8) d'un joint articulé (1) étanche est emmanchée à force dans un alésage (6) du levier de voie (2).

9. Chariot de manutention, **caractérisé en ce qu'**il comporte un élément de raccordement (15) et un joint articulé étanche (1) fixée sur celui-ci selon l'une des revendications 1 à 5.

10. Chariot de manutention selon la revendication 9, **caractérisé en ce qu'**il comporte deux éléments de raccordement (15) auxquels est associée un joint articulé étanche (1) comportant deux bagues d'étanchéité (8).

11. Chariot de manutention selon l'une des revendications 9 ou 10, **caractérisé en ce qu'**au moins un élément de raccordement (15) présente un chanfrein d'insertion ou un arrondi d'insertion (19) sur un bord de la surface d'étanchéité (20) de l'élément de raccordement (15).
